# EUROPEAN PATENT APPLICATION

(11) **EP 4 273 698 A1**
(43) Date of publication of application: **08.11.2023**
(21) Application number: 21914480.5
(22) Date of filing: 29.12.2021
(51) Int. Cl.: G06F 9/50

(54) **INFORMATION PROCESSING METHOD AND APPARATUS, DEVICE, AND STORAGE MEDIUM**

(30) Priority: 31.12.2020 CN 202011629426
(71) Applicant: Vivo Mobile Communication Co., Ltd., Dongguan, Guangdong 523863 (CN)
(72) Inventor: LV, Huazhang, Dongguan, Guangdong 523863 (CN); KE, Xiaowan, Dongguan, Guangdong 523863 (CN); BAO, Wei, Dongguan, Guangdong 523863 (CN)
(74) Representative: Raffay & Fleck
(86) International application number: PCT/CN2021/142409
(87) International publication number: WO 2022/143748

(57) **Abstract**

Embodiments of the present application provide an information processing method and apparatus, a device, and a storage medium. The method comprises: sending a first query request, the first query request comprising at least one of: computing power demand information of a computing power task, and computing power demand information of a service.

## Description

### CROSS-REFERENCE TO RELATED APPLICATIONS

This application claims priority to Chinese Patent Application No. 202011629426.5 filed in China on December 31, 2020, which is incorporated herein by reference in its entirety.

### TECHNICAL FIELD

This application pertains to the field of communication technologies, and specifically relates to an information processing method and apparatus, a device, and a storage medium.

### BACKGROUND

A computing power/resource network, also referred to as a computing power sensing network, is a new network architecture that is proposed to cope with the trend of converged development of a computing network. Based on ubiquitous network connections, dynamically distributed computing resources are interconnected and scheduled in a coordinated manner by using multi-dimensional resources such as network, storage, and computing power, so that a large quantity of applications can invoke computing resources in different places on demand and in real time, to implement global optimization of connections and computing power in the network and provide consistent user experience.

Currently, a conventional Internet hypothesis is a static server (server) plus a mobile client (client), a service is based on an Internet Protocol (Internet Protocol, IP) addressing manner resolved by a domain name system (Domain Name System, DNS), and a network mode of a Transmission Control Protocol (Transmission Control Protocol, TCP)/Transport Layer Security (Transport Layer Security, TLS) session is established.

In a sixth-generation mobile communication (the 6th generation mobile communication, 6G) era, a network needs to perceive, interconnect, and collaborate ubiquitous computing power and services. In an existing computing power configuration method, it is difficult to adapt to a dynamic, micro-service, and ubiquitous computing service scenario, and consistent user experience cannot be satisfied.

### SUMMARY

Embodiments of this application provide an information processing method and apparatus, a device, and a storage medium, to adapt to a dynamic, micro-service, and ubiquitous computing service scenario and satisfy consistent user experience.

According to a first aspect, an embodiment of this application provides an information processing method, which is applied to a first communication device and includes:
sending a first query request; where
the first query request includes at least one of the following:
   computing power requirement information of a computing power task; and
   computing power requirement information of a service.

According to a second aspect, an embodiment of this application provides an information processing method, which is applied to a second communication device and includes:
obtaining first information, where the first information includes at least one of the following:
a first query request; and
computing power status information of a server; and
performing a first operation according to the first information; where the first operation includes at least one of the following:
querying a first server according to the first information;
determining a second query request;
querying the first server according to the second query request;
sending the second query request to complete at least one of the following:
   determining a computing power resource allocation request; and
   sending the computing power resource allocation request;
   where
   the first query request includes at least one of the following:
      computing power requirement information of a computing power task; and
      computing power requirement information of a service.

According to a third aspect, an embodiment of this application provides an information processing method, which is applied to a fifth communication device and includes:
obtaining first information, where the first information includes at least one of the following:
a second query request; and
computing power status information of a server; and
performing a third operation according to the first information; where the third operation includes at least one of the following:
   querying a first server according to the second query request;
   determining a computing power resource allocation request; and
   sending the computing power resource allocation request;
   where
   the second query request includes at least one of the following:
      computing power requirement information of a computing power task and/or computing power requirement information of a service;
      location information of a first communication device;
      network-selected user plane information; and
      data network access identifier DNAI information.

According to a fourth aspect, an embodiment of this application provides an information processing method, which is applied to a third communication device and includes:
obtaining a computing power resource allocation request; and
performing a second operation according to the computing power resource allocation request; where
the second operation includes at least one of the following:
   reserving or allocating a computing power resource of a candidate server; and
   sending the computing power resource allocation request;
   the computing power resource allocation request includes at least one of the following:
index information of the candidate server;
   a computing power resource allocation request identifier ID;
   a computing power resource status occupied in the request;
   computing power task completion time and/or service completion time;
   computing power task start time and/or service start time; and
   computing power task description information and/or service description information.

According to a fifth aspect, an embodiment of this application provides an information processing method, which is applied to a fourth communication device and includes:
receiving a computing power subscription request; and
sending at least one of the following computing power status information to a device that subscribes to a computing power state:
   a computing power remaining status or a computing power available status;
   total computing power;
   a computing power use status;
   a predicted future computing power use status; and
   a computing power use status in a past first period of time.

According to a sixth aspect, an embodiment of this application provides an information processing apparatus, including:
a first sending module, configured to send a first query request; where the first query request includes at least one of the following:
computing power requirement information of a computing power task; and
computing power requirement information of a service.

According to a seventh aspect, an embodiment of this application provides an information processing apparatus, including:
a first obtaining module, configured to obtain first information, where the first information includes at least one of the following:
a first query request; and
computing power status information of a server; and
a first execution module, configured to perform a first operation according to the first information; where
the first operation includes at least one of the following:
querying a first server according to the first information;
determining a second query request;
querying the first server according to the second query request;
sending the second query request to complete at least one of the following:
   determining a computing power resource allocation request; and
   sending the computing power resource allocation request;
   where
   the first query request includes at least one of the following:
      computing power requirement information of a computing power task; and
      computing power requirement information of a service.

According to an eighth aspect, an embodiment of this application provides an information processing apparatus, including:
a second obtaining module, configured to obtain first information, where the first information includes at least one of the following:
a second query request; and
computing power status information of a server; and
a third execution module, configured to perform a third operation according to the first information; where
the third operation includes at least one of the following:
   querying a first server according to the second query request;
   determining a computing power resource allocation request; and
   sending the computing power resource allocation request;
   where
   the second query request includes at least one of the following:
      computing power requirement information of a computing power task and/or computing power requirement information of a service;
      location information of a first communication device;
      network-selected user plane information; and
      data network access identifier DNAI information.

According to a ninth aspect, an embodiment of this application provides an information processing apparatus, including:
a third obtaining module, configured to obtain a computing power resource allocation request; and
a second execution module, configured to perform a second operation according to the computing power resource allocation request; where
the second operation includes at least one of the following:
   reserving or allocating a computing power resource of a candidate server; and
   sending the computing power resource allocation request;
   the computing power resource allocation request includes at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

According to a tenth aspect, an embodiment of this application provides an information processing apparatus, including:
a first receiving module, configured to receive a computing power subscription request; and
a second sending module, configured to send at least one of the following computing power status information to a device that subscribes to a computing power state:
   a computing power remaining status or a computing power available status;
   total computing power;
   a computing power use status;
   a predicted future computing power use status; and
   a computing power use status in a past first period of time.

According to an eleventh aspect, an embodiment of this application provides a first communication device. The first communication device includes a processor, a memory, and a program or an instruction that is stored in the memory and that can run on the processor, and when the program or the instruction is executed by the processor, steps in the method described in the first aspect are implemented.

According to a twelfth aspect, an embodiment of this application provides a second communication device. The second communication device includes a processor, a memory, and a program or an instruction that is stored in the memory and that can run on the processor, and when the program or the instruction is executed by the processor, steps in the method described in the second aspect are implemented.

According to a thirteenth aspect, an embodiment of this application provides a fifth communication device. The fifth communication device includes a processor, a memory, and a program or an instruction that is stored in the memory and that can run on the processor, and when the program or the instruction is executed by the processor, steps in the method described in the third aspect are implemented.

According to a fourteenth aspect, an embodiment of this application provides a third communication device. The third communication device includes a processor, a memory, and a program or an instruction that is stored in the memory and that can run on the processor, and when the program or the instruction is executed by the processor, steps in the method described in the fourth aspect are implemented.

According to a fifteenth aspect, an embodiment of this application provides a fourth communication device. The fourth communication device includes a processor, a memory, and a program or an instruction that is stored in the memory and that can run on the processor, and when the program or the instruction is executed by the processor, steps in the method described in the fifth aspect are implemented.

According to a sixteenth aspect, an embodiment of this application provides a chip. The chip includes a processor and a communication interface, the communication interface is coupled to the processor, and the processor is configured to run a program or an instruction to implement the method described in the first aspect, the second aspect, the third aspect, the fourth aspect, or the fifth aspect.

According to a seventeenth aspect, an embodiment of this application provides a computer program product. The computer program product is stored in a non-volatile storage medium, and the computer program product is executed by at least one processor to implement the method described in the first aspect, the second aspect, the third aspect, the fourth aspect, or the fifth aspect.

According to the information processing method and apparatus, the device, and the storage medium provided in the embodiments of this application, a terminal adds a computing power dimension to a query request of a server, and matches computing power status information of the server according to computing power requirement information and computing power requirement information of a service in the query request of the server, to find a server that satisfies a computing power task of a user and/or a service requirement.

### BRIEF DESCRIPTION OF DRAWINGS

FIG. 1 is a first schematic diagram of an information processing method according to an embodiment of this application;
FIG. 2 is a second schematic diagram of an information processing method according to an embodiment of this application;
FIG. 3 is a third schematic diagram of an information processing method according to an embodiment of this application;
FIG. 4 is a fourth schematic diagram of an information processing method according to an embodiment of this application;
FIG. 5 is a fifth schematic diagram of an information processing method according to an embodiment of this application;
FIG. 6 is a schematic diagram of a network architecture according to an embodiment of this application;
FIG. 7 is a first schematic diagram of signaling interaction of information processing according to an embodiment of this application;
FIG. 8 is a second schematic diagram of signaling interaction of information processing according to an embodiment of this application;
FIG. 9a is a first schematic diagram of an information processing apparatus according to an embodiment of this application;
FIG. 9b is a second schematic diagram of an information processing apparatus according to an embodiment of this application;
FIG. 10 is a third schematic diagram of an information processing apparatus according to an embodiment of this application;
FIG. 11 is a fourth schematic diagram of an information processing apparatus according to an embodiment of this application;
FIG. 12 is a fifth schematic diagram of an information processing apparatus according to an embodiment of this application;
FIG. 13 is a sixth schematic diagram of an information processing apparatus according to an embodiment of this application;
FIG. 14 is a schematic diagram of a hardware structure of a first communication device according to an embodiment of this application;
FIG. 15 is a schematic diagram of a hardware structure of a second communication device according to an embodiment of this application;
FIG. 16 is a schematic diagram of a hardware structure of a fifth communication device according to an embodiment of this application;
FIG. 17 is a schematic diagram of a hardware structure of a third communication device according to an embodiment of this application; and
FIG. 18 is a schematic diagram of a hardware structure of a fourth communication device according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some rather than all of the embodiments of this application. Based on the embodiments of this application, all other embodiments obtained by a person of ordinary skill in the art without creative efforts shall fall within the protection scope of this application.

Terms "first" and "second" in the specification and claims of this application are used to distinguish between similar objects, and do not need to be used to describe a specific order or sequence. It should be understood that data used in this way may be interchangeable in an appropriate case, so that the embodiments of this application can be implemented in a sequence other than those shown or described herein, and objects distinguished by "first" and "second" are generally of a same type, and a quantity of objects is not limited. For example, there may be one or more first targets. In addition, in the specification and the claims, "and/or" represents at least one of connected objects, and the character "/" generally represents an "and/or" relationship between associated objects.

It should be noted that the technology described in this application is not limited to a Long Term Evolution (Long Time Evolution, LTE)/LTE-advanced (LTE-Advanced, LTE-A) system, and may also be used in various wireless communication systems, for example, Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application are often used interchangeably. The described technology may be used in the foregoing system and radio technology, and may also be used in another system and radio technology. However, a New Radio (New Radio, NR) system is described below as an example, and the term NR is used in most of the descriptions, although these technologies can also be used in an application other than an application of the NR system, for example, a sixth (6^{th} Generation, 6G) communication system.

In the embodiments of this application, optionally, obtaining may be understood as obtaining from a configuration, receiving, receiving by using a request, obtaining through self-learning, obtaining through derivation based on information that is not received, or obtaining after processing based on received information. This may be specifically determined based on an actual requirement, and is not limited in the embodiments of this application. For example, when specific capability indication information sent by a device is not received, it may be deduced that the device does not support the capability.

Optionally, sending may include broadcasting, broadcasting in a system message, and returning after responding to a request.

In an embodiment of this application, a data channel may include but is not limited to one of the following: a packet data unit (Packet Data Unit, PDU) session, a packet data network (Packet Data Network, PDN) connection, a quality of service (Quality of Service, QoS) flow, a bearer, and an Internet protocol security (Internet Protocol Security, IPsec) channel, where the bearer may be an evolved radio access bearer (Evolved Radio Access Bearer, E-RAB), an evolved radio access bearer (Evolved Radio Access Bearer, RAB), a data radio bearer (Data Radio Bearer, DRB), a signaling radio bearer (signalling radio bearers, SRB), or the like.

In an optional embodiment of this application, a communication device may include at least one of the following: a communication network element and a terminal.

In an embodiment of this application, the communication network element may include at least one of the following: a core network element and a radio access network element.

In the embodiments of this application, a core network element (CN network element) may include but is not limited to at least one of the following: a core network device, a core network node, a core network function, a core network element, a mobility management entity (Mobility Management Entity, MME), an access mobility management function (Access Management Function, AMF), a session management function (Session Management Function, SMF), a user plane function (User Plane Function, UPF), a serving gateway (serving GW, SGW), a PDN gateway (PDN Gate Way, PDN gateway), a policy control function (Policy Control Function, PCF), a policy and charging rules function unit (Policy and Charging Rules Function, PCRF), a general packet radio service (General Packet Radio Service, GPRS) serving GPRS support node (SGSN, SGSN), a gateway GPRS support node (Gateway GPRS Support Node, GGSN), unified data management (Unified Data Management, UDM), unified data repository (Unified Data Repository, UDR), a home subscriber server (Home Subscriber Server, HSS), an application function (Application Function, AF), and a centralized network configuration (Centralized network configuration, CNC).

In the embodiments of this application, a radio access network (Radio Access Network, RAN) network element may include but is not limited to at least one of the following: a radio access network device, a radio access network node, a radio access network function, a radio access network unit, a third generation partnership project (Third Generation Partnership Project, 3GPP) radio access network, a non-3GPP radio access network, a centralized unit (Centralized Unit, CU), a distributed unit (Distributed Unit, DU), a base station, an evolved NodeB (evolved NodeB, eNB), a 5G base station (gNB), a radio network controller (Radio Network Controller, RNC), a NodeB (NodeB), a non-3GPP interworking function (Non-3GPP Inter Working Function, N3IWF), an access control (Access Controller, AC) node, an access point (Access Point, AP) device, a wireless local area network (Wireless Local Area Networks, WLAN) node, and an N3IWF.

In an optional embodiment of the present invention, computing power includes a computing speed or a computing capability. For example, a computing speed or a computing capability of a server, a central processing unit (Central Processing Unit, CPU), a graphics processing unit (Graphics Processing Unit, GPU), a terminal, or the like is described, and is generally represented by a quantity of computing times per second.

In an optional embodiment of the present invention, a computing power requirement includes a computing power resource that needs to be consumed to complete a computing power task.

In an optional embodiment of the present invention, the computing power task includes a to-be-completed computing task that needs to consume specific computing power resources.

In an optional embodiment of the present invention, a computing power state includes at least one of the following: a computing power use status, a computing power remaining status, or a computing power available status, for example, a computing power use status, a computing power available status, or a computing power remaining status of a device such as a server, a terminal, a CPU, or a GPU. The computing power remaining status or the computing power available status may be available computing power. The computing power use status may be a computing power use ratio.

In an optional embodiment of the present invention, the computing power may be represented by at least one of the following:
a floating point computing amount (flops);
a quantity of processor cores;
a multiply accumulate operation (Multiply Accumulate, MAC);
a quantity of graphics processor cores;
a dominant frequency of a processor/graphics processor;
a multiple frequency of a processor/graphics processor;
an integer unit of a processor/graphics processor;
a floating point unit of a processor/graphics processor; and
an output speed of a computed hash function.

In an optional embodiment of the present invention, the computing power requirement information includes at least one of the following:
a required floating point computing amount;
a quantity of required processor cores;
a required multiply accumulate operation;
a quantity of required graphics processor cores;
a required dominant frequency of a processor/graphics processor;
a required multiple frequency of a processor/graphics processor;
a required integer unit of a processor/graphics processor;
a required floating point unit of a processor/graphics processor; and
a required output speed of a computed hash function.

In an optional embodiment of the present invention, the description information of the computing power task and/or the service includes at least one of the following:
a computing power task ID and/or a service ID, an FQDN, a source IP address, a target IP address, a source port, a destination port, a protocol number, a source MAC address, a target MAC address identifier, a packet detection rule (Packet Detection Rule, PDR), and a data network name (Data Network Name, DNN); and
application description information Application descriptors (including OSid and/or OSAppid), and a packet detection rule PDR.

In an optional embodiment of the present invention, the computing power status information includes at least one of the following:
a computing power remaining status or a computing power available status;
total computing power;
a computing power use status;
a predicted future computing power use status; and
a computing power use status in a past first period of time.

In an optional embodiment of the present invention, the server includes one of the following:
a computing power server, where in one implementation, the computing power server includes a server capable of providing a computing resource and/or a computing capability;
an edge application server (EAS);
an application server;
a computing resource server;
a computing capability server;
an edge computing resource server;
an edge computing capability server; and
an edge computing power server.

In an optional embodiment of the present invention, the first communication device includes one of the following:
a terminal;
a computing resource client (including an edge computing resource client);
a computing capability client (including a computing capability client);
a computing resource enabler client (including a computing resource enabler client);
a computing capability enabler client (including a computing capability enabler client); and
an enabler client (including an edge enabler client).

In an optional embodiment of the present invention, the second communication device includes one of the following:
a computing power perceiving network element, for example, a network data analytics function (Network Data Analytics Function, NWDAF) network element and an edge enabler server (edge enabler server, EES);
a server query and resolving network element, for example, a local DNS resolver (local DNS resolver, LDNSR) and an edge enabler server (edge enabler server, EES);
a computing power resource allocation network element (for example, a computing power resource allocation server (for example, an edge configuration server (Edge Configuration Server, ECS))); and
a server query network element, for example, a DNS server (DNS server).

In an optional embodiment of the present invention, the third communication device includes one of the following:
a computing power perceiving network element, for example, a network data analytics function (Network Data Analytics Function, NWDAF) network element;
an enabler server (Enabler Server, ES) (including an edge enabler server (Edge Enabler Server, EES)); and
a computing power enabler server (including an edge a computing power enabler server).

In an optional embodiment of the present invention, the fourth communication device includes one of the following:
a computing power server;
an edge application server; and
an application server.

In an implementation, the computing power server includes a server capable of providing a computing resource and/or a computing capability.

In an implementation, the computing power server includes an edge computing power server.

In an implementation, the application server includes an edge application server.

In an implementation, the computing resource server includes an edge computing resource server.

In an implementation, the computing capability server includes an edge computing capability server.

In an optional embodiment of the present invention, the fifth communication device includes one of the following:
a server query and resolving network element, for example, a DNS resolver (DNS resolver, DNSR); and
an edge enabler server.

In an implementation, the DNS resolver includes a local DNS resolver (local DNS resolver, LDNSR).

In an optional embodiment of the present invention, the sixth communication device includes one of the following:
a server query network element, for example, a DNS server (DNS server).

In an implementation, the DNS server includes at least one of the following: a local DNS server (Local DNS server), and a central DNS server Central DNS server.

In an optional embodiment of the present invention, the index information of the server includes at least one of the following:

Internet Protocol (Internet Protocol, IP) address information;
port number information;
a uniform resource locator (uniform resource locator, URL);
a fully qualified domain name (Fully Qualified Domain Name, FQDN); and
a server identifier (Identifier, ID).

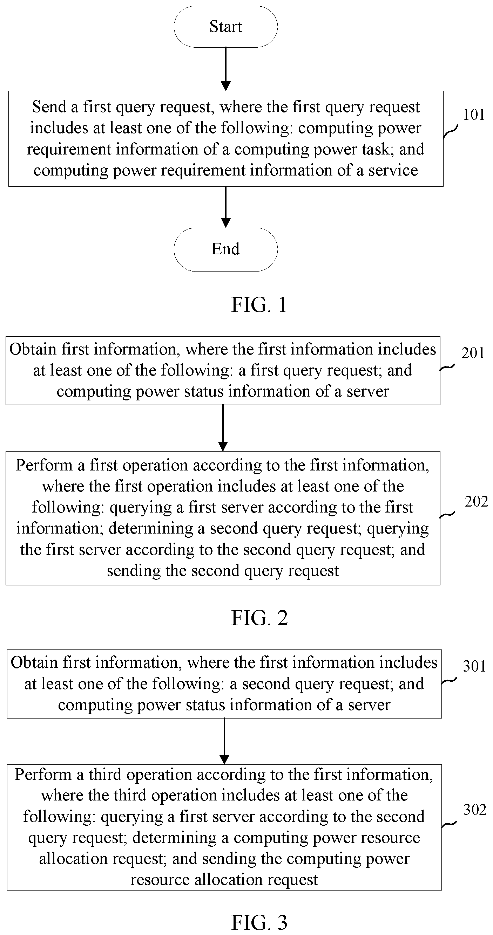

FIG. 1 is a first schematic diagram of an information processing method according to an embodiment of this application. As shown in FIG. 1, an embodiment of this application provides an information processing method, and the information processing method may be performed by a first communication device. The method includes:

Step 101: Send a first query request.

The first query request includes at least one of the following:
computing power requirement information of a computing power task; and
computing power requirement information of a service.

Optionally, the method further includes step 102: Receive a first query response of a server.

Optionally, the first query response of the server includes a computing power resource allocation response.

Optionally, the first query response of the server includes index information of a first server.

Optionally, in an implementation, the computing power resource allocation response includes a resource allocation success indication.

Optionally, in another implementation, the computing power resource allocation response includes a resource allocation failure indication.

Optionally, a terminal or a computing power client sends the first query request to a computing power enabler server or a computing power perceiving network element.

The first query request includes at least one of the following information:
computing power requirement information of a computing power task; and
computing power requirement information of a service.

Optionally, the first query request is used to request a computing power service. In other words, when the first communication device has a computing power task and/or a service and needs to request a computing power service from a network, the first communication device sends the first query request to the network.

According to the information processing method provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

FIG. 2 is a second schematic diagram of an information processing method according to an embodiment of this application. As shown in FIG. 2, an embodiment of this application provides an information processing method, and the information processing method may be performed by a second communication device. The method includes:

Step 201: Obtain first information, where the first information includes at least one of the following:
a first query request; and
computing power status information of a server.

Step 202: Perform a first operation according to the first information.

The first operation includes at least one of the following:
querying a first server according to the first information;
determining a second query request; and
querying the first server according to the second query request;
sending the second query request to complete at least one of the following:
   determining a computing power resource allocation request; and
   sending the computing power resource allocation request;
   where
   the first query request includes at least one of the following:
      computing power requirement information of a computing power task; and
      computing power requirement information of a service.

Optionally, the server can provide computing power for a computing power task or a service.

Optionally, the second query request is used to determine the first server, that is, a network determines, according to the second query request, a server that provides a computing power service for a first communication device. The first server is a server that provides a computing power service for the first communication device.

Optionally, the computing power resource allocation request is used to reserve or allocate a computing power resource of a candidate server. In other words, the network may pre-perform resource reservation or allocation on a computing power server according to a computing power task of a user or a computing power requirement of a service, to ensure normal running of the service; and may also reselect a computing power server for the user in a case that computing power resources are insufficient.

According to the information transmission method provided in this embodiment of this application, the first server is determined by using the computing power requirement information of the computing power task and/or the computing power requirement information of the service that are included in the first query request, thereby further improving accuracy of selecting a computing power device.

Optionally, the second query request includes at least one of the following:
computing power requirement information of a computing power task and/or computing power requirement information of a service;
location information of a first communication device;
network-selected user plane information; and
data network access identifier (Data Network Access Identifier, DNAI) information.

Optionally, the second query request may be included in an ECS Option (edns-client-subnet).

According to the information transmission method provided in this embodiment of this application, the first server is determined by using the computing power requirement information of the computing power task and/or the computing power requirement information of the service that are included in the second query request, thereby further improving accuracy of selecting a computing power device.

Optionally, the computing power status information includes at least one of the following:
a computing power remaining status or a computing power available status;
total computing power;
a computing power use status;
a predicted future computing power use status; and
a computing power use status in a past first period of time.

Optionally, in an implementation, the second communication device may subscribe to a computing power status to obtain computing power status information of the server.

Optionally, in an implementation, a computing power status of the fourth communication device is subscribed to.

According to the information transmission method provided in this embodiment of this application, the first server is determined according to computing power status information of each server, thereby further improving accuracy of selecting a computing power device.

Optionally, the first operation further includes:
obtaining the first server; and
sending index information of the first server.

Optionally, the first server is obtained from a device that previously sends the second query request.

Optionally, the index information of the first server is sent to the first communication device. For example, the index information of the first server is sent to a terminal.

According to the information transmission method provided in this embodiment of this application, a first server that satisfies a computing power requirement corresponding to a computing power task can be quickly determined by using index information of the first server, thereby further improving accuracy of selecting a computing power device.

Optionally, the first server can satisfy at least one of the following:
the first server can satisfy the first query request or the second query request;
the first server can satisfy the computing power resource allocation request;
a physical distance between the first server and the first communication device is the shortest;
a routing distance or a delay between the first server and the first communication device is the shortest;
   and/or
a candidate server can satisfy the first query request or the second query request.

Optionally, the candidate server is referred to as a candidate when no resource is allocated. If the resource is successfully allocated, the candidate server is converted into the first server.

Optionally, in an implementation, an available computing power status of the first server includes at least one of the following:
an available computing power status of the first server;
total computing power of the first server minus a computing power use status; and
computing power requirement information of a computing power task and/or computing power requirement information of a service that can be satisfied.

Optionally, a resource allocation request or the computing power resource allocation request is used to perform reservation or allocation for a computing power task.

Optionally, in an implementation, the resource allocation request is sent to the second communication device.

Optionally, in an implementation, the resource allocation request is sent to the fourth communication device.

Optionally, after the sending a computing power resource allocation request message to the first server, the first operation further includes: receiving a computing power resource allocation response.

Optionally, in an implementation, the computing power resource allocation response includes a resource allocation success indication.

Optionally, in another implementation, the computing power resource allocation response includes a resource allocation failure indication.

According to the information transmission method provided in this embodiment of this application, the first server is determined by determining whether the first server satisfies a computing power requirement corresponding to a computing power task, thereby further improving accuracy of selecting a computing power device.

Optionally, the computing power resource allocation request includes at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

Optionally, in an implementation, in a case that the candidate server returns a computing power resource allocation success response, the candidate server may be converted into the first server.

Optionally, in an implementation, based on the computing power resource allocation response,
after the resource allocation success response is received, a server query response is sent;
after the resource allocation success response is received, index information of a server is sent; and
after a resource allocation failure response is received, a server query request is re-sent.

Optionally, in an implementation, index information of a server is sent to a session management function (Session Management Function, SMF) network element.

Optionally, in another implementation, computing power server information is sent to a third communication device.

Optionally, in an implementation, a server query response is sent to a terminal, and/or an LDNSR, and/or an EES.

According to the information transmission method provided in this embodiment of this application, a computing power resource of the first server is reserved or allocated by using the computing power resource allocation information, thereby further improving accuracy of selecting a computing power device.

According to the information processing method provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

FIG. 3 is a third schematic diagram of an information processing method according to an embodiment of this application. As shown in FIG. 3, an embodiment of this application provides an information processing method, and the information processing method may be performed by a fifth communication device. The method includes:

Step 301: Obtain first information, where the first information includes at least one of the following:
a second query request; and
computing power status information of a server.

Step 302: Perform a third operation according to the first information.

The third operation includes at least one of the following:
querying a first server according to the second query request;
determining a computing power resource allocation request; and
sending the computing power resource allocation request;
where
the second query request includes at least one of the following:
   computing power requirement information of a computing power task and/or computing power requirement information of a service;
   location information of a first communication device;
   network-selected user plane information; and
   data network access identifier DNAI information.

Optionally, the server can provide computing power for a computing power task or a service.

According to the information transmission method provided in this embodiment of this application, an available computing power resource of each server is determined by obtaining computing power status information of the server, thereby further improving accuracy of selecting a computing power device.

Optionally, the third operation further includes:
sending index information of the first server.

Optionally, the index information of the first server is sent to a second communication device.

According to the information transmission method provided in this embodiment of this application, a first server that satisfies a computing power requirement corresponding to a computing power task can be quickly determined by using index information of the first server, thereby further improving accuracy of selecting a computing power device.

Optionally, the first server can satisfy at least one of the following:
the first server can satisfy the second query request;
the first server can satisfy the computing power resource allocation request;
a physical distance between the first server and the first communication device is the shortest;
a routing distance or a delay between the first server and the first communication device is the shortest;
   and/or
a candidate server can satisfy the second query request.

Optionally, the second query request is used to determine the first server, that is, a network determines, according to the second query request, a server that provides a computing power service for the first communication device. The first server is a server that provides a computing power service for the first communication device. Optionally, the computing power resource allocation request is used to reserve or allocate a computing power resource of a candidate server. In other words, the network may pre-perform resource reservation or allocation on a computing power server according to a computing power task of a user or a computing power requirement of a service, to ensure normal running of the service; and may also reselect a computing power server for the user in a case that computing power resources are insufficient.

Before a computing power resource is successfully allocated to the server, the server is a candidate server, and after the computing power resource is successfully allocated, the server is converted into the first server.

According to the information transmission method provided in this embodiment of this application, the first server is determined by determining whether the first server satisfies a computing power requirement corresponding to a computing power task, thereby further improving accuracy of selecting a computing power device.

Optionally, that the first server can satisfy the second query request includes at least one of the following:
the first server can satisfy the computing power requirement information of the computing power task and/or the computing power requirement information of the service;
sending a computing power resource allocation request to the first server, and obtaining a computing power resource allocation success response returned by the first server;
   and/or
that the first server can satisfy the computing power resource allocation request includes:
   sending a computing power resource allocation request to the first server, and obtaining a computing power resource allocation success response returned by the first server.

Optionally, in an implementation, an available computing power status of the first server includes at least one of the following:
an available computing power status of the first server;
total computing power of the first server minus a computing power use status; and
computing power requirement information of a computing power task and/or computing power requirement information of a service that can be satisfied.

According to the information transmission method provided in this embodiment of this application, it is determined that a computing power is successfully allocated to the first server by using computing power resource allocation success response information returned by the first server, thereby further improving accuracy of selecting a computing power device.

According to the information processing method provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

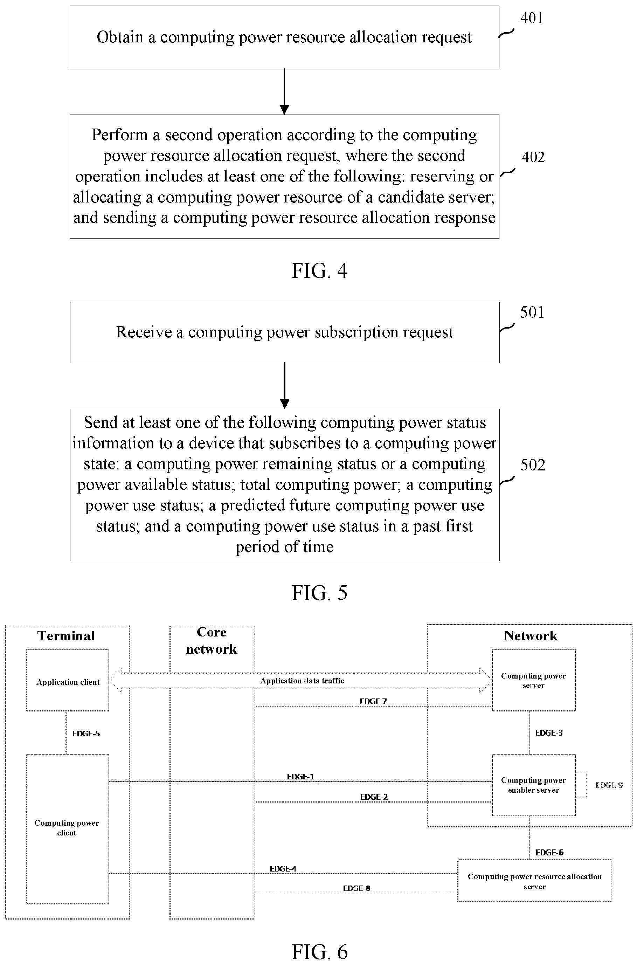

FIG. 4 is a fourth schematic diagram of an information processing method according to an embodiment of this application. As shown in FIG. 4, an embodiment of this application provides an information processing method, and the information processing method may be performed by a third communication device. The method includes:

Step 401: Obtain a computing power resource allocation request.

Step 402: Perform a second operation according to the computing power resource allocation request.

The second operation includes at least one of the following:
reserving or allocating a computing power resource of a candidate server; and
sending the computing power resource allocation request;
the computing power resource allocation request includes at least one of the following:
   index information of the candidate server;
   a computing power resource allocation request identifier ID;
   a computing power resource status occupied in the request;
   computing power task completion time and/or service completion time;
   computing power task start time and/or service start time; and
   computing power task description information and/or service description information.

An embodiment of this application provides an information processing method. In an original domain name resolution system and process, a computing power dimension is added to consider a computing power requirement of a user or a computing power requirement of a service. When the user initiates a server query process, a terminal provides a computing power task of the user or a service requirement that is used as one of important parameters for server query and resolution. The server may select an optimal computing power server or edge computing power server by comprehensively considering a current location of the user, a task of the user, or the computing power requirement of the service to provide the service for the user, to realize the best server that comprehensively considers computing power guarantees and whose routing distance is the shortest. In addition, network may reserve or allocate a resource on a computing power server in advance according to the computing power task of the user or the computing power requirement of the service, to ensure normal running of the service; and may also reselect a computing power server for the user in a case that computing power resources are insufficient.

FIG. 5 is a fifth schematic diagram of an information processing method according to an embodiment of this application. As shown in FIG. 5, an embodiment of this application provides an information processing method, and the information processing method may be performed by a fourth communication device. The method includes:

Step 501: Receive a computing power subscription request.

Step 502: Send at least one of the following computing power status information to a device that subscribes to a computing power state:
a computing power remaining status or a computing power available status;
total computing power;
a computing power use status;
a predicted future computing power use status; and
a computing power use status in a past first period of time.

Optionally, the computing power remaining status or the computing power available status may be available computing power.

Optionally, the computing power use status may be a computing power use ratio.

According to the information transmission method provided in this embodiment of this application, the computing power subscription request is received to report computing power status information of each server, so that a network determines an available computing power resource of each server, thereby further improving accuracy of selecting a computing power device.

Optionally, the following is further included:
receiving a computing power resource allocation request; and
sending a computing power resource allocation response.

Optionally, the resource allocation request allocates and/or reserves a computing power resource in the fourth communication device according to computing power requirement information of a computing power task and computing power requirement information of a service.

Optionally, in an implementation, the computing power resource allocation response includes a resource allocation success indication.

Optionally, in another implementation, the computing power resource allocation response includes a resource allocation failure indication.

According to the information transmission method provided in this embodiment of this application, it is determined that a computing power is successfully allocated to the first server by using computing power resource allocation success response information returned by the first server, thereby further improving accuracy of selecting a computing power device.

According to the information processing method provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

The following further describes the method in the foregoing embodiment by using two specific examples:

### 1. Based on an SA6 architecture

FIG. 6 is a schematic diagram of a network architecture according to an embodiment of this application. As shown in FIG. 6, this embodiment of this application is based on an SA6 architecture.

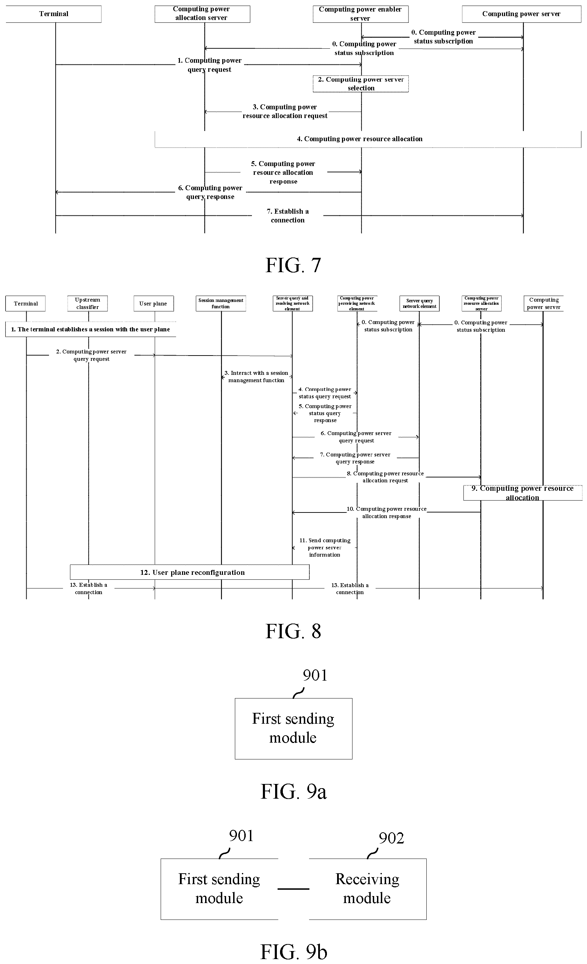

FIG. 7 is a first schematic diagram of signaling interaction of information processing according to an embodiment of this application. As shown in FIG. 7, a signaling interaction procedure of information processing is as follows:

### Step 0: A computing power enabler server subscribes to server computing power status information, and a computing power allocation server subscribes to each server or a computing power enabler server for computing power status information.

The computing power status information of the computing power server includes available computing power of the computing power server, and the like.

Step 1: A terminal or a computing power client sends a server query request to the computing power enabler server.

The server query request includes at least one of the following information: computing power requirement information of a computing power task, and computing power requirement information of a service.

Step 2: The computing power enabler server obtains first information, and selects a server that satisfies the server query request to obtain address information of the server.

The first information is obtained, and the first information includes at least one of the following: a first query request and computing power status information of the server.

The address information of the server includes at least one of the following:

IP address information, port number information, and URL of the server.

Before a computing power resource is successfully allocated to the server, the server is a candidate server.

After the computing power resource is successfully allocated to the server, the server is converted into the first server.

Step 3: The computing power enabler server sends a resource allocation request to a computing power resource allocation server.

Optionally, in an implementation, the computing power resource allocation server is the selected first server.

The resource allocation request includes at least one of the following:
index information of a candidate server;
a resource allocation request ID;
a computing power resource status occupied in the request;
computing power task completion time and/or service completion time;
computing power task start time and/or service start time; and
computing power task description information and/or service description information.

Optionally, in an implementation, the computing power resource allocation server is not the selected first server.

The computing power resource allocation server finds a first server by using index information of the first server, and sends a resource allocation request to the first server.

Step 4: A computing power resource allocation server sends a resource allocation request to the first server. The first server reserves or allocates a resource. If the allocation succeeds, the first server sends an allocation success response, and the candidate server is converted into the first server. If the allocation fails, the first server sends an allocation failure response.

Step 5: The computing power resource allocation server sends a computing power resource allocation response to the computing power enabler server.

Optionally, in an implementation, if the computing power enabler server receives a computing power resource allocation success response, step 6 is performed.

Optionally, in another implementation, if the computing power enabler server receives a computing power resource allocation failure response, step 2 to step 5 are repeatedly performed.

Step 6: The computing power enabler server sends a server query response to the terminal.

The server query response includes index information of a first server that satisfies server query auxiliary information.

It should be noted that common server index information, regardless of servers, is the same.

Optionally, in an implementation, that the first server satisfies a requirement of the server query auxiliary information includes: a computing power status of the first server can support a computing power requirement.

Optionally, in another implementation, that the first server satisfies a requirement of the server query auxiliary information includes: a computing power status of the first server can support a computing power requirement; and a location of the first server satisfies a location of the terminal (for example, the first server is closest to the location of the terminal or a path between the first server and the terminal is optimal).

The computing power status information of the computing power server includes available computing power of the computing power server, and the like.

### 2. Based on an NWDAF

FIG. 8 is a second schematic diagram of signaling interaction of information processing according to an embodiment of this application. As shown in FIG. 8, a signaling interaction procedure of information processing is as follows:

Step 0: A computing power perceiving network element subscribes to a computing power server for computing power status information, and a server query and resolving network element subscribes to the computing power perceiving network element for computing power status information of each computing power server.

For status information of the computing power server, refer to step 7.

Step 1: A terminal establishes a session with a user plane.

Step 2: The terminal sends a server query request to a server query and resolving network element.

The server query request includes at least one of the following:
computing power requirement information of a computing power task and computing power requirement information of a service.

Step 3: The server query and resolving network element interacts with a session management function (for example, an SMF), and obtains, from the session management function, location information of the terminal, network-selected user plane information, and data network access identifier (DNAI) information.

Step 4: The server query and resolving network element obtains first information, where the first information includes at least one of the following: a first query request and computing power status information of a server; and sends the first information to the server to a server query network element.

The computing power status information of the server includes: a computing power use status of the server, a computing power remaining status, or a computing power available status.

A first operation is performed according to the first information.

The first operation includes at least one of the following:
querying a first server according to the first information;
determining a second query request; and
querying the first server according to the second query request or sending the second query request, to complete at least one of the following:
   determining a computing power resource allocation request; and
   sending the computing power resource allocation request;
   where
   the first query request includes at least one of the following:
      computing power requirement information of a computing power task; and
      computing power requirement information of a service.

Step 5: The server query and resolving network element sends the second query request to the server query network element, where the second query request includes at least one of the following:
computing power requirement information of a computing power task and/or computing power requirement information of a service;
location information of the terminal;
network-selected user plane information; and
data network access identifier DNAI information.

Step 6: The server query network element selects a server that satisfies the second query request as the first server, and returns index information of the server to the server query and resolving network element.

The first server can satisfy at least one of the following:
the first server can satisfy the first query request or the second query request;
the first server can satisfy the computing power resource allocation request;
a physical distance between the first server and the first communication device is the shortest;
a routing distance or a delay between the first server and the first communication device is the shortest;
   and/or
the candidate server can satisfy the first query request or the second query request.

Optionally, in an implementation, that the first computing power server satisfies a requirement of the server query auxiliary information includes: a computing power status of the first computing power server can support a computing power requirement of a computing power task.

Optionally, in another implementation, that the first computing power server satisfies a requirement of the server query auxiliary information includes: a computing power status of the first computing power server can support a computing power requirement of a computing power task; and a location of the first computing power server satisfies a location of the terminal (for example, the first computing power server is closest to the location of the terminal or a path between the first computing power server and the terminal is optimal).

The computing power status information of the computing power server includes available computing power of the computing power server, and the like.

Step 7: The server query and resolving network element sends a resource allocation request to a computing power resource allocation server.

Optionally, in an implementation, the computing power resource allocation server is the selected first server.

The resource allocation request includes at least one of the following:
index information of the candidate server;
a resource allocation request ID;
a computing power resource status occupied in the request;
computing power task completion time and/or service completion time;
computing power task start time and/or service start time; and
computing power task description information and/or service description information.

Optionally, in an implementation, the computing power resource allocation server is not the selected first server. In this case, the computing power resource allocation server finds a first server by using index information of the first server, and sends a resource allocation request to the first server.

Step 8: The first server sends a resource allocation response to the computing power resource allocation server. The computing power resource allocation server sends a computing power resource allocation response to the server query and resolving network element.

Optionally, in an implementation, if the resource allocation response includes a resource allocation success indication, step 9 is performed.

Optionally, in another implementation, if the resource allocation response includes a resource allocation failure indication, step 4 to step 8 are repeatedly performed.

Step 9: The server query and resolving network element sends the index information of the first server to a session management function.

Step 10: The session management function reconfigures a user plane according to address information of the first server.

Step 11: The terminal establishes an IP connection to the first computing power server.

FIG. 9a is a first schematic diagram of an information processing apparatus according to an embodiment of this application. As shown in FIG. 9a, an embodiment of this application provides an information processing apparatus, including:
a first sending module 901, configured to send a first query request; where the first query request includes at least one of the following:
computing power requirement information of a computing power task; and
computing power requirement information of a service.

Optionally, FIG. 9b is a second schematic diagram of an information processing apparatus according to an embodiment of this application. As shown in FIG. 9b, an embodiment of this application provides an information processing apparatus, including:
a first sending module 901, configured to send a first query request; where the first query request includes at least one of the following:
computing power requirement information of a computing power task; and
computing power requirement information of a service; and
a receiving module 902, configured to receive a first query response of a server.

According to the information processing apparatus provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

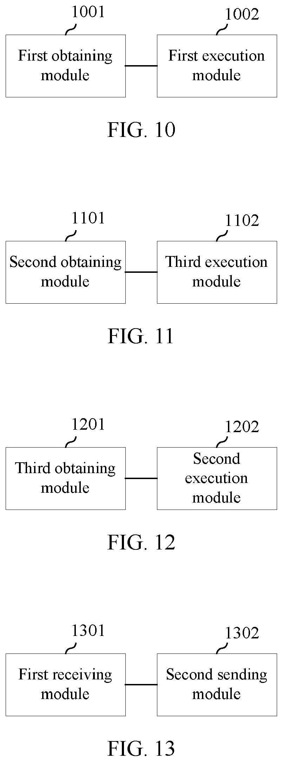

FIG. 10 is a third schematic diagram of an information processing apparatus according to an embodiment of this application. As shown in FIG. 10, an embodiment of this application provides an information processing apparatus, including:
a first obtaining module 1001, configured to obtain first information, where the first information includes at least one of the following:
a first query request; and
computing power status information of a server; and
a first execution module 1002, configured to perform a first operation according to the first information; where
the first operation includes at least one of the following:
   querying a first server according to the first information;
   determining a second query request;
   querying the first server according to the second query request;
   sending the second query request to complete at least one of the following:
      determining a computing power resource allocation request; and
      sending the computing power resource allocation request;
      where
      the first query request includes at least one of the following:
         computing power requirement information of a computing power task; and
         computing power requirement information of a service.

Optionally, the second query request includes at least one of the following:
computing power requirement information of a computing power task and/or computing power requirement information of a service;
location information of a first communication device;
network-selected user plane information; and
data network access identifier DNAI information.

Optionally, the computing power status information includes at least one of the following:
a computing power remaining status or a computing power available status;
total computing power;
a computing power use status;
a predicted future computing power use status; and
a computing power use status in a past first period of time.

Optionally, the first operation further includes:
obtaining the first server; and
sending index information of the first server.

Optionally, the first server can satisfy at least one of the following:
the first server can satisfy the first query request or the second query request;
the first server can satisfy the computing power resource allocation request;
a physical distance between the first server and the first communication device is the shortest;
a routing distance or a delay between the first server and the first communication device is the shortest;
   and/or
a candidate server can satisfy the first query request or the second query request.

Optionally, the computing power resource allocation request includes at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

According to the information processing apparatus provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

FIG. 11 is a fourth schematic diagram of an information processing apparatus according to an embodiment of this application. As shown in FIG. 11, an embodiment of this application provides an information processing apparatus, including:
a second obtaining module 1101, configured to obtain first information, where the first information includes at least one of the following:
a second query request; and
computing power status information of a server; and
a third execution module 1102, configured to perform a third operation according to the first information; where
the third operation includes at least one of the following:
   querying a first server according to the second query request;
   determining a computing power resource allocation request; and
   sending the computing power resource allocation request;
   where
   the second query request includes at least one of the following:
      computing power requirement information of a computing power task and/or computing power requirement information of a service;
      location information of a first communication device;
      network-selected user plane information; and
      data network access identifier DNAI information.

Optionally, the third operation further includes:
sending index information of the first server.

Optionally, the first server can satisfy at least one of the following:
the first server can satisfy the second query request;
the first server can satisfy the computing power resource allocation request;
a physical distance between the first server and the first communication device is the shortest;
a routing distance or a delay between the first server and the first communication device is the shortest;
   and/or
a candidate server can satisfy the second query request.

Optionally, that the first server can satisfy the second query request includes at least one of the following:
the first server can satisfy the computing power requirement information of the computing power task and/or the computing power requirement information of the service;
sending a computing power resource allocation request to the first server, and obtaining a computing power resource allocation success response returned by the first server;
   and/or
that the first server can satisfy the computing power resource allocation request includes:
   sending a computing power resource allocation request to the first server, and obtaining a computing power resource allocation success response returned by the first server.

According to the information processing apparatus provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

FIG. 12 is a fifth schematic diagram of an information processing apparatus according to an embodiment of this application. As shown in FIG. 12, an embodiment of this application provides an information processing apparatus, including:
a third obtaining module 1201, configured to obtain a computing power resource allocation request; and
a second execution module 1202, configured to perform a second operation according to the computing power resource allocation request; where
the second operation includes at least one of the following:
   reserving or allocating a computing power resource of a candidate server; and
   sending the computing power resource allocation request;
   the computing power resource allocation request includes at least one of the following:
      index information of the candidate server;
      a computing power resource allocation request identifier ID;
      a computing power resource status occupied in the request; computing power task completion time and/or service completion time;
      computing power task start time and/or service start time; and
      computing power task description information and/or service description information.

According to the information processing apparatus provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

FIG. 13 is a sixth schematic diagram of an information processing apparatus according to an embodiment of this application. As shown in FIG. 13, an embodiment of this application provides an information processing apparatus, including:
a first receiving module 1301, configured to receive a computing power subscription request; and
a second sending module 1302, configured to send at least one of the following computing power status information to a device that subscribes to a computing power state:
   a computing power remaining status or a computing power available status;
   total computing power;
   a computing power use status;
   a predicted future computing power use status; and
   a computing power use status in a past first period of time.

Optionally, a second receiving module and a third sending module are further included.

The second receiving module is configured to receive a computing power resource allocation request.

The third sending module is configured to send a computing power resource allocation response.

According to the information processing apparatus provided in this embodiment of this application, a terminal adds a computing power dimension to a query request of a server, and matches computing power status information of the server according to computing power requirement information and computing power requirement information of a service in the query request of the server, to find a server that satisfies a computing power task of a user and/or a service requirement. The network may pre-perform resource reservation or allocation on a computing power server according to the computing power task or the computing power requirement of the service of the user, and index information of a server that successfully allocates a resource is sent to the terminal as a query response result.

The information processing apparatus in this embodiment of this application may be an apparatus or an electronic device with an operating system, or may be a component, an integrated circuit, or a chip in a terminal. The electronic device may be a mobile electronic device, or may be a non-mobile electronic device. For example, the mobile terminal may include but is not limited to the foregoing listed types of terminals. The non-mobile terminal may be a server, a network attached storage (Network Attached Storage, NAS), a personal computer (personal computer, PC), a television (television, TV), a teller machine, or a self-service machine. This is not specifically limited in this embodiment of this application.

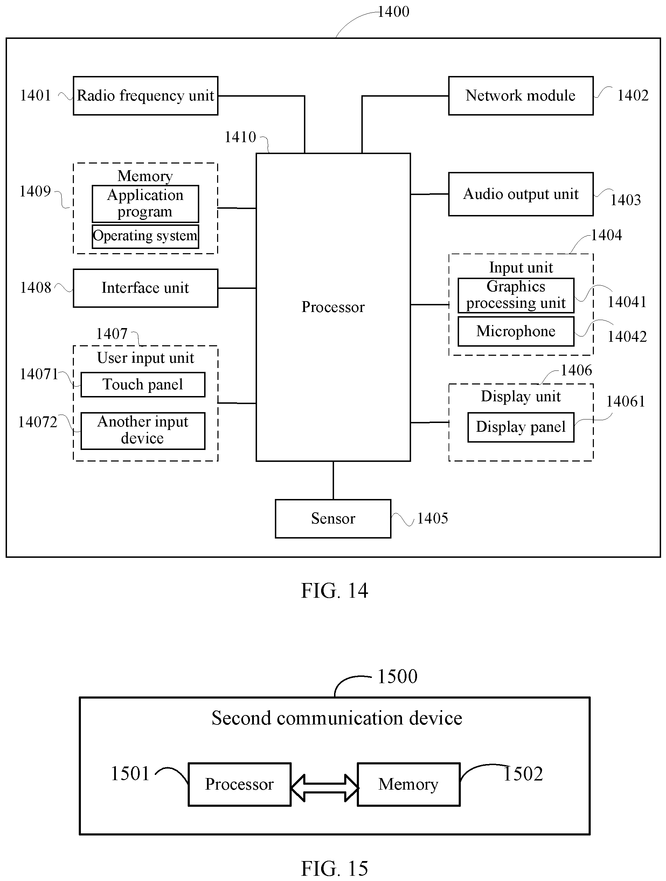

FIG. 14 is a schematic diagram of a hardware structure of a first communication device according to an embodiment of this application. As shown in FIG. 14, the first communication device 1400 includes but is not limited to at least some of the following components: a radio frequency unit 1401, a network module 1402, an audio output unit 1403, an input unit 1404, a sensor 1405, a display unit 1406, a user input unit 1407, an interface unit 1408, a memory 1409, and a processor 1410.

It may be understood by a person skilled in the art that the first communication device 1400 may further include a power supply (such as a battery) that supplies power to each component. The power supply may be logically connected to the processor 1410 by using a power management system, to implement functions such as charging, discharging, and power consumption management by using the power management system. A structure of the first communication device shown in FIG. 14 does not constitute a limitation on the first communication device, and may include more or fewer components than those shown in the figure, or combine some components, or have different part arrangements. Details are not described herein again.

It should be understood that, in this embodiment of this application, the input unit 1404 may include a graphics processing unit (Graphics Processing Unit, GPU) 14041 and a microphone 14042. The graphics processing unit 14041 processes image data of a static picture or a video obtained by an image capture apparatus (such as a camera) in a video capture mode or an image capture mode. The display unit 1406 may include a display panel 14061, and the display panel 14061 may be configured in a form of a liquid crystal display, an organic light emitting diode, or the like. The user input unit 1407 includes a touch panel 14071 and another input device 14072. The touch panel 14071 is also referred to as a touchscreen. The touch panel 14071 may include two parts: a touch detection apparatus and a touch controller. The another input device 14072 may include but is not limited to one or more of a physical keyboard, a function key (such as a volume control key or an on/off key), a trackball, a mouse, a joystick, and the like. Details are not described herein.

In this embodiment of this application, after receiving downlink data from a network side device, the radio frequency unit 1401 sends the downlink data to the processor 1410 for processing, and sends uplink data to the network side device. Generally, the radio frequency unit 1401 includes but is not limited to an antenna, at least one amplifier, a transceiver, a coupler, a low noise amplifier, a duplexer, and the like.

The memory 1409 may be configured to store a software program or an instruction and various data. The memory 1409 may mainly include a storage program or instruction area and a storage data area, where the storage program or instruction area may store an operating system, an application program or an instruction required by at least one function (such as a sound play function or an image play function), and the like. In addition, the memory 1409 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash memory device, or another non-volatile solid-state storage device.

The processor 1410 may include one or more processing units. Optionally, the processor 1410 may be integrated with an application processor and a modem processor. The application processor mainly processes an operating system, a user interface, an application program or an instruction, and the like, and the modem processor mainly processes wireless communication, for example, a baseband processor. It may be understood that the modem processor may also not be integrated into the processor 1410.

The radio frequency unit 1401 is configured to send a first query request.

The first query request includes at least one of the following:
computing power requirement information of a computing power task; and
computing power requirement information of a service.

The first communication device embodiment in this embodiment of this application is a product embodiment corresponding to the foregoing method embodiment applied to the first communication device. All implementations in the foregoing method embodiment applied to the first communication device are applicable to the first communication device embodiment, and a same or similar technical effect can also be achieved. Therefore, details are not described herein again.

FIG. 15 is a schematic diagram of a hardware structure of a second communication device according to an embodiment of this application. As shown in FIG. 15, an embodiment of this application provides a second communication device that includes a processor 1501, a memory 1502, and a program or an instruction that is stored in the memory 1502 and that can run on the processor 1501. For example, when the second communication device 1500 is a network side device, the program or the instruction is executed by the processor 1501 to implement each process of the foregoing information processing method embodiment applied to the second communication device.

The second communication device embodiment in this embodiment of this application is a product embodiment corresponding to the foregoing method embodiment applied to the second communication device. All implementations in the foregoing method embodiment applied to the second communication device are applicable to the second communication device embodiment, and a same or similar technical effect can also be achieved. Therefore, details are not described herein again.

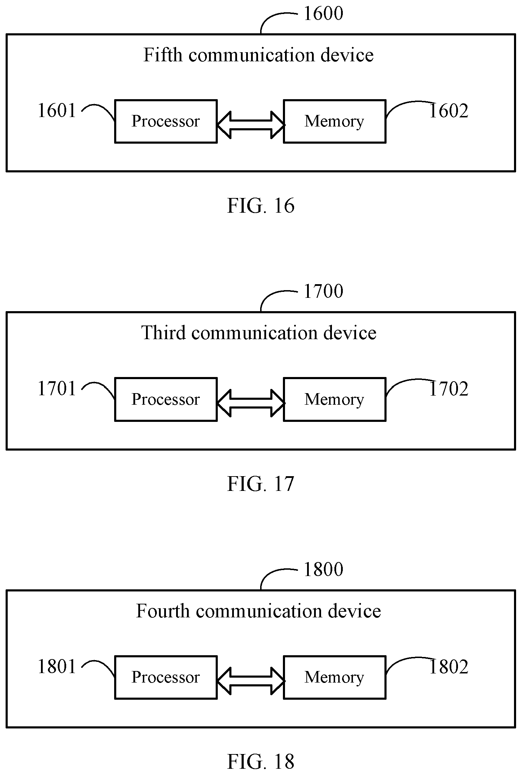

FIG. 16 is a schematic diagram of a hardware structure of a fifth communication device according to an embodiment of this application. As shown in FIG. 16, an embodiment of this application provides a fifth communication device that includes a processor 1601, a memory 1602, and a program or an instruction that is stored in the memory 1602 and that can run on the processor 1601. For example, when the fifth communication device 1600 is a network side device, the program or the instruction is executed by the processor 1601 to implement each process of the foregoing information processing method embodiment applied to the fifth communication device.

The fifth communication device embodiment in this embodiment of this application is a product embodiment corresponding to the foregoing method embodiment applied to the fifth communication device. All implementations in the foregoing method embodiment applied to the fifth communication device are applicable to the fifth communication device embodiment, and a same or similar technical effect can also be achieved. Therefore, details are not described herein again.

FIG. 17 is a schematic diagram of a hardware structure of a third communication device according to an embodiment of this application. As shown in FIG. 17, an embodiment of this application provides a third communication device that includes a processor 1701, a memory 1702, and a program or an instruction that is stored in the memory 1702 and that can run on the processor 1701. For example, when the third communication device 1700 is a network side device, the program or the instruction is executed by the processor 1701 to implement each process of the foregoing information processing method embodiment applied to the third communication device.

The third communication device embodiment in this embodiment of this application is a product embodiment corresponding to the foregoing method embodiment applied to the third communication device. All implementations in the foregoing method embodiment applied to the third communication device are applicable to the third communication device embodiment, and a same or similar technical effect can also be achieved. Therefore, details are not described herein again.

FIG. 18 is a schematic diagram of a hardware structure of a fourth communication device according to an embodiment of this application. As shown in FIG. 18, an embodiment of this application provides a fourth communication device that includes a processor 1801, a memory 1802, and a program or an instruction that is stored in the memory 1802 and that can run on the processor 1801. For example, when the fourth communication device 1800 is a network side device, the program or the instruction is executed by the processor 1801 to implement each process of the foregoing information processing method embodiment applied to the fourth communication device.

The fourth communication device embodiment in this embodiment of this application is a product embodiment corresponding to the foregoing method embodiment applied to the fourth communication device. All implementations in the foregoing method embodiment applied to the fourth communication device are applicable to the fourth communication device embodiment, and a same or similar technical effect can also be achieved. Therefore, details are not described herein again.

It should be noted that, in the foregoing embodiments, the second communication device, the third communication device, the fourth communication device, and the fifth communication device may be separate devices, that is, the second communication device, the third communication device, the fourth communication device, and the fifth communication device are all independent devices; or may also be an integrated device, that is, any two or more of the second communication device, the third communication device, the fourth communication device, and the fifth communication device are one independent device.

An embodiment of this application further provides a readable storage medium. A program or an instruction is stored in the readable storage medium. When the program or the instruction is executed by a processor, processes of the embodiment of the information processing method can be implemented, and a same technical effect can be achieved. To avoid repetition, details are not described herein.

The processor is a processor in the terminal in the foregoing embodiment. The readable storage medium includes a computer-readable storage medium such as a read-only memory (Read-Only Memory, ROM), a random access memory (Random Access Memory, RAM), a magnetic disk, an optical disc, or the like.

An embodiment of this application further provides a chip. The chip includes a processor and a communication interface, the communication interface is coupled to the processor, and the processor is configured to run a program or an instruction to implement processes of the embodiment of the information processing method, and a same technical effect can be achieved. To avoid repetition, details are not described herein again.

It should be understood that the chip mentioned in this embodiment of this application may also be referred to as a system-level chip, a system chip, a chip system, or a system on a chip.

It should be noted that in this specification, the term "include", "including", or any other variant is intended to cover non-exclusive inclusion, so that a process, method, article, or apparatus that includes a series of elements includes not only those elements but also other elements that are not explicitly listed, or includes elements inherent to such a process, method, article, or apparatus. In the absence of more restrictions, an element defined by the statement "including a..." does not exclude another element in a process, method, article, or apparatus that includes the element. In addition, it should be noted that the scope of the method and apparatus in the embodiments of this application is not limited to performing a function in a sequence shown or discussed, and may further include performing the function in a substantially simultaneous manner or in a reverse sequence according to the involved function, and may further include performing the function in a substantially simultaneous manner or in a reverse sequence according to the involved function. For example, the described method may be performed in a different sequence, and various steps may be added, omitted, removed, or combined. In addition, features described with reference to some examples may be combined in other examples.

According to the descriptions of the foregoing implementations, a person skilled in the art may clearly understand that the foregoing method embodiments may be implemented by using software and a required universal hardware platform, or certainly may be implemented by using hardware. However, in many cases, the former is a better implementation. Based on such an understanding, the technical solutions of this application essentially or the part contributing to existing technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, or a network device) to execute the methods described in the embodiments of this application.

The embodiments of this application are described with reference to the accompanying drawings. However, this application is not limited to the foregoing specific implementations. The foregoing specific implementations are merely examples, but are not limiting. A person of ordinary skill in the art may make many forms without departing from the objective and the scope of the claims of this application, and these forms all fall within the protection scope of this application.

## Claims

1. An information processing method, applied to a first communication device, and comprising:
sending a first query request; wherein
the first query request comprises at least one of the following:
computing power requirement information of a computing power task; and
computing power requirement information of a service.

2. An information processing method, applied to a second communication device, and comprising:
obtaining first information, wherein the first information comprises at least one of the following:
a first query request;
computing power status information of a server; and
performing a first operation according to the first information; wherein
the first operation comprises at least one of the following:
querying a first server according to the first information;
determining a second query request;
querying the first server according to the second query request; and
sending the second query request to complete at least one of the following:
determining a computing power resource allocation request; and
sending the computing power resource allocation request;
wherein
the first query request comprises at least one of the following:
computing power requirement information of a computing power task; and
computing power requirement information of a service.

3. The information processing method according to claim 2, wherein the second query request comprises at least one of the following:
computing power requirement information of a computing power task and/or computing power requirement information of a service;
location information of a first communication device;
network-selected user plane information; and
data network access identifier DNAI information.

4. The information processing method according to claim 2, wherein the computing power status information comprises at least one of the following:
a computing power remaining status or a computing power available status;
total computing power;
a computing power use status;
a predicted future computing power use status; and
a computing power use status in a past first period of time.

5. The information processing method according to claim 2, wherein the first operation further comprises:
obtaining the first server; and
sending index information of the first server.

6. The information processing method according to claim 2, wherein the first server satisfies at least one of the following:
the first server satisfies the first query request or the second query request;
the first server satisfies the computing power resource allocation request;
a physical distance between the first server and the first communication device is the shortest;
a routing distance or a delay between the first server and the first communication device is the shortest;
and/or
a candidate server satisfies the first query request or the second query request.

7. The information processing method according to claim 6, wherein the computing power resource allocation request comprises at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

8. An information processing method, applied to a fifth communication device, and comprising:
obtaining first information; wherein
the first information comprises at least one of the following:
a second query request; and
computing power status information of a server; and
performing a third operation according to the first information; wherein
the third operation comprises at least one of the following:
querying a first server according to the second query request;
determining a computing power resource allocation request; and
sending the computing power resource allocation request;
wherein
the second query request comprises at least one of the following:
computing power requirement information of a computing power task and/or computing power requirement information of a service;
location information of a first communication device;
network-selected user plane information; and
data network access identifier DNAI information.

9. The information processing method according to claim 8, wherein the third operation further comprises:
sending index information of the first server.

10. The information processing method according to claim 8, wherein the first server satisfies at least one of the following:
the first server satisfies the second query request;
the first server satisfies the computing power resource allocation request;
a physical distance between the first server and the first communication device is the shortest;
a routing distance or a delay between the first server and the first communication device is the shortest;
and/or
a candidate server satisfies the second query request.

11. The information processing method according to claim 10, wherein that the first server satisfies the second query request comprises at least one of the following:
the first server satisfies the computing power requirement information of the computing power task and/or the computing power requirement information of the service;
sending a computing power resource allocation request to the first server, and obtaining a computing power resource allocation success response returned by the first server;
and/or
that the first server satisfies the computing power resource allocation request comprises:
sending a computing power resource allocation request to the first server, and obtaining a computing power resource allocation success response returned by the first server.

12. An information processing method, applied to a third communication device, and comprising:
obtaining a computing power resource allocation request; and
performing a second operation according to the computing power resource allocation request; wherein
the second operation comprises at least one of the following:
reserving or allocating a computing power resource of a candidate server; and
sending the computing power resource allocation request; wherein
the computing power resource allocation request comprises at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

13. An information processing method, applied to a fourth communication device, and comprising:
receiving a computing power subscription request; and
sending at least one of the following computing power status information to a device that subscribes to a computing power state:
a computing power remaining status or a computing power available status;
total computing power;
a computing power use status;
a predicted future computing power use status; and
a computing power use status in a past first period of time.

14. The information processing method according to claim 13, further comprising:
receiving a computing power resource allocation request; and
sending a computing power resource allocation response.

15. An information processing apparatus, comprising:
a first sending module, configured to send a first query request; wherein
the first query request comprises at least one of the following:
computing power requirement information of a computing power task; and
computing power requirement information of a service.

16. An information processing apparatus, comprising:
a first obtaining module, configured to obtain first information, wherein the first information comprises at least one of the following:
a first query request; and
computing power status information of a server; and
a first execution module, configured to perform a first operation according to the first information; wherein
the first operation comprises at least one of the following:
querying a first server according to the first information;
determining a second query request;
querying the first server according to the second query request;
sending the second query request to complete at least one of the following:
determining a computing power resource allocation request; and
sending the computing power resource allocation request;
wherein
the first query request comprises at least one of the following:
computing power requirement information of a computing power task; and
computing power requirement information of a service.

17. The information processing apparatus according to claim 16, wherein the second query request comprises at least one of the following:
computing power requirement information of a computing power task and/or computing power requirement information of a service;
location information of a first communication device;
network-selected user plane information; and
data network access identifier DNAI information.

18. The information processing apparatus according to claim 16, wherein the computing power status information comprises at least one of the following:
a computing power remaining status or a computing power available status;
total computing power;
a computing power use status;
a predicted future computing power use status; and
a computing power use status in a past first period of time.

19. The information processing apparatus according to claim 16, wherein the first operation further comprises:
obtaining the first server; and
sending index information of the first server.

20. The information processing apparatus according to claim 16, wherein the first server satisfies at least one of the following:
the first server satisfies the first query request or the second query request;
the first server satisfies the computing power resource allocation request;
a physical distance between the first server and the first communication device is the shortest;
a routing distance or a delay between the first server and the first communication device is the shortest;
and/or
a candidate server satisfies the first query request or the second query request.

21. The information processing apparatus according to claim 20, wherein the computing power resource allocation request comprises at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

22. An information processing apparatus, comprising:
a second obtaining module, configured to obtain first information, wherein the first information comprises at least one of the following:
a second query request; and
computing power status information of a server; and
a third execution module, configured to perform a third operation according to the first information; wherein
the third operation comprises at least one of the following:
querying a first server according to the second query request;
determining a computing power resource allocation request; and
sending the computing power resource allocation request;
wherein
the second query request comprises at least one of the following:
computing power requirement information of a computing power task and/or computing power requirement information of a service;
location information of a first communication device;
network-selected user plane information; and
data network access identifier DNAI information.

23. The information processing apparatus according to claim 22, wherein the third operation further comprises:
sending index information of the first server.

24. The information processing apparatus according to claim 22, wherein the first server satisfies at least one of the following:
the first server satisfies the second query request;
the first server satisfies the computing power resource allocation request;
a physical distance between the first server and the first communication device is the shortest;
a routing distance or a delay between the first server and the first communication device is the shortest;
and/or
a candidate server satisfies the second query request.

25. The information processing apparatus according to claim 24, wherein that the first server satisfies the second query request comprises at least one of the following:
the first server satisfies the computing power requirement information of the computing power task and/or the computing power requirement information of the service;
sending a computing power resource allocation request to the first server, and obtaining a computing power resource allocation success response returned by the first server;
and/or
that the first server satisfies the computing power resource allocation request comprises:
sending a computing power resource allocation request to the first server, and obtaining a computing power resource allocation success response returned by the first server.

26. An information processing apparatus, comprising:
a third obtaining module, configured to obtain a computing power resource allocation request; and
a second execution module, configured to perform a second operation according to the computing power resource allocation request; wherein
the second operation comprises at least one of the following:
reserving or allocating a computing power resource of a candidate server; and
sending the computing power resource allocation request; wherein
the computing power resource allocation request comprises at least one of the following:
index information of the candidate server;
a computing power resource allocation request identifier ID;
a computing power resource status occupied in the request;
computing power task completion time and/or service completion time;
computing power task start time and/or service start time; and
computing power task description information and/or service description information.

27. An information processing apparatus, comprising:
a first receiving module, configured to receive a computing power subscription request; and
a second sending module, configured to send at least one of the following computing power status information to a device that subscribes to a computing power state:
a computing power remaining status or a computing power available status;
total computing power;
a computing power use status;
a predicted future computing power use status; and
a computing power use status in a past first period of time.

28. The information processing apparatus according to claim 27, further comprising a second receiving module and a third sending module, wherein
the second receiving module is configured to receive a computing power resource allocation request; and
the third sending module is configured to send a computing power resource allocation response.

29. A first communication device, comprising: a processor, a memory, and a program or an instruction that is stored in the memory and that can run on the processor, wherein when the program or the instruction is executed by the processor, steps in the information processing method according to claim 1 are implemented.

30. A second communication device, comprising: a processor, a memory, and a program or an instruction that is stored in the memory and that can run on the processor, wherein when the program or the instruction is executed by the processor, steps in the information processing method according to any one of claims 2 to 7 are implemented.

31. A fifth communication device, comprising: a processor, a memory, and a program or an instruction that is stored in the memory and that can run on the processor, wherein when the program or the instruction is executed by the processor, steps in the information processing method according to any one of claims 8 to 11 are implemented.

32. A third communication device, comprising: a processor, a memory, and a program or an instruction that is stored in the memory and that can run on the processor, wherein when the program or the instruction is executed by the processor, steps in the information processing method according to claim 12 are implemented.

33. A fourth communication device, comprising: a processor, a memory, and a program or an instruction that is stored in the memory and that can run on the processor, wherein when the program or the instruction is executed by the processor, steps in the information processing method according to either of claims 13 and 14 are implemented.

34. A readable storage medium, wherein the readable storage medium stores a program or an instruction, and when the program or the instruction is executed by a processor, steps in the information processing method according to any one of claims 1 to 14 are implemented.

35. A chip, wherein the chip comprises a processor and a communication interface, the communication interface is coupled to the processor, and the processor is configured to run a program or an instruction, to implement steps in the information processing method according to any one of claims 1 to 14.

36. A computer program product, wherein the computer program product is stored in a non-volatile storage medium, and the computer program product is executed by at least one processor, to implement steps in the information processing method according to any one of claims 1 to 14.
